# EUROPEAN PATENT SPECIFICATION

(11) **EP 1 471 797 B1**
(45) Date of publication and mention of the grant of the patent: **05.03.2008**
(21) Application number: 03713242.0
(22) Date of filing: 15.01.2003
(51) Int. Cl.: A23K 1/00, A23L 1/00, A21D 13/00, A21D 13/08, A23G 3/20, A23G 3/00

(54) **METHODS AND PRODUCTS PRODUCED THEREBY TO STABILIZE MULTI-LAYER FOOD PRODUCTS**
VERFAHREN UND DAMIT HERGESTELLTE PRODUKTE FÜR DIE STABILISIERUNG VON MEHRSCHICHTIGEN NAHRUNGSMITTELPRODUKTEN
PROCEDES DE STABILISATION DE PRODUITS ALIMENTAIRES A COUCHES MULTIPLES ET PRODUITS FABRIQUES AU MOYEN DESDITS PROCEDES

(30) Priority: 15.01.2002 US 348831 P
(43) Date of publication of application: 03.11.2004
(73) Proprietor: Mars Incorporated, McLean, Virginia 22101-3883 (US)
(72) Inventor: GLAZIER, Barry, David, Harrisburg, PA 17104 (US); YOUCHEFF, George, Gary, Maytown, PA 17550 (US)
(74) Representative: James, Anthony Christopher W.P.
(86) International application number: PCT/US2003/001185
(87) International publication number: WO 2003/059084

(56) References cited:
- EP-A- 0 462 309
- CA-A- 1 298 515
- FR-A- 2 508 280
- FR-A- 2 731 876
- FR-A- 2 808 167
- US-A- 4 542 028
- US-A- 4 961 943
- PATENT ABSTRACTS OF JAPAN vol. 2003, no. 03, 5 May 2003 (2003-05-05) -& JP 2002 335863 A (MORINAGA & CO LTD), 26 November 2002 (2002-11-26)

## Description

The present invention relates to methods, and the food products produced thereby, to reduce or delay fluid, especially fat, migration between the edible layers of multi-layer food products, especially confections, and therefore extend the life of the intended aesthetic experience associated with the particular food product. It is carried out by providing at least one edible fluid migration-inhibiting barrier layer to at least a portion of the outer surface of at least one inner layer. The invention provides, in particular, multi-layer food products with increased shelf life and/or prolonged consumer acceptability The invention is especially useful for the inhibition of fat bloom or at least the prolonged aesthetic preservation of the outer chocolate layer of multi-layer confections. The invention may also be utilized to extend the intended mouth feel of a food product.

Prepared food products including salty and sweet snack foods, pet foods, and the like are consumed the world over. In many instances, the manufacturers of these food products have experienced an increase in demand for food products with multiple layers. Non-limiting examples include salty snacks having a cheese center with a crispy or crunchy outer shell, pet foods with a soft, meaty center and a crunchy outer shell, and the like.

Particularly favored food products include confections and other sweet edibles. The confections may include water-soluble components such as natural and artificial fruit derivatives, fat-containing and/or oil-soluble components such as chocolate and nut meat-containing materials. Some of the more popular confections include chocolate and chocolate-containing confections. Chocolate-containing confections include full-sized and bite-sized candies and other multi-layer confections. These multi-layer confections typically include at least one fat-containing internal layer, such as chocolate, nougat, nut meat-containing centers, crisped rice, and the like, and one external layer, typically a fat-containing material such as chocolate. Other popular exemplary multi-layer confections include yogurt covered confections and fruit-containing confections. While these multi-layer confections are designed to provide pleasing taste, mouth feel, and visual appearance, they may be altered by temperature cycling and/or time.

The problem is common in multi-layer confections that contain fat in layers that are in intimate contact and is particularly pronounced in confections having a fat-containing inner layer, e.g. peanut butter, and an adjoining fat-containing outer layer, e.g. chocolate.
Specifically, the fat in the chocolate outer layer may "bloom," i.e. the polymorphic transformation of the crystal lattice formed by fats in the chocolate. Many blooming problems are associated with the migration of oils between the fat-containing inner and outer layers as the multi-layer confection diffuses the oils from one layer to another. Oil migration and the resulting outer chocolate bloom may lead to multi-layer confections that are discolored, hazy, and/or greasy in appearance. Upon consumption, fat bloom in confections may lead to a consumer experience that is not as pleasing in taste and/or mouth feel. Worse yet, a consumer may reject the confection as old, stale, or generally unappetizing in appearance.

The food product industry has continually attempted to address the extension of shelf life and/or consumer acceptability of their food products. Most proffered solutions involve affecting physicochemical changes in the layers themselves including tempering methods, addition of various materials, and control over the types and levels of migrating fluids, e.g. fats, in the layers. *See e.g.,* U.S. Patent Nos. 6,210,739; 5,849,353; 5,576,045; 5,554,408; 5,431,948; 5,324,533; 5,080,920; 5,023,102; 5,023,099; 4,923,708; 4,446,166; and 4,041,188. Unfortunately, many of these solutions increase food product manufacturing costs and/or complexity, or do not adequately resolve the above-described issues.

U.S. Patent No. 5,385,744, to Cain, et al., directed, *inter alia,* to resolving outer chocolate bloom problems with chocolate-encapsulated fillings states, *inter alia,* "[i]n order to overcome this problem, a solution was sought in the use of a barrier layer between the liquid filling and the coating. However, such an extra layer complicates the production process and often has a negative influence on the mouthfeel of the product." The patent then discusses, *inter alia,* "that the problems associated with the application of the prior art products can be solved by using a specific hardstock fat in the encapsulated filling."
CA-A-1298515 describes an ice cream product having a coated crunchy core. The core of crunchy cereal, nut pieces or the like is coated with at least one layer of a fatty substance that solidifies below about 25°C. The coating may comprise alternate layers of the fatty coating material and dry powder material such as icing sugar, cocoa powder, milk powder or whey powder.
FR-A-2808167 describes methods for preparing chocolate confectionery products in which at least one particle is coated by alternating layers of liquid fat and layers of powder comprising cocoa. The coated products may be incorporated in ice cream.
US-A-4961943 describes coated dried fruit pieces for addition to breakfast cereals. The fruit pieces are prepared by applying a coating of a melted fat or oil onto the dried fruit, followed by a dusting of a dry, crunchy particulate material. The melted fat or oil coating inhibits moisture migration from the dried fruit.

There remains a need for a simple, effective, and cost conscious way to inhibit the migration of fats between the layers of multi-layer food products. It has now been surprisingly discovered that such a barrier layer may be provided with a bearable increase, if any, in the complexity of the production process and with little, if any, negative influence on the mouth feel of the food product as a whole. In some food products, e.g. snacks and pet foods, the intended mouth feel of the food is extended for a longer period of time.

The present invention is directed to a simple, effective, and cost conscious way to inhibit the migration of fluids, especially fats, between the layers of multi-layer food products, especially confections.

In a first aspect, the present invention provides a method to inhibit migration of fat in multi-layer food products comprising the steps of providing at least one barrier layer for the inhibition of fat migration overlaying at least a portion of an outer surface of at least one inner layer comprising fat, and providing an outer layer that overlays at least a portion of said at least one inner layer, wherein said inner layer comprises less fat that is solid at 25°C than said outer layer, and wherein said barrier layer comprises fat and is in powder form.

In a second aspect, the present invention provides a fat migration-inhibited multi-layer food product comprising at least one inner layer comprising fat, at least one barrier layer for the inhibition of fat migration overlaying at least a portion of an outer surface of said at least one inner layer, and an outer layer that overlays at least a portion of said at least one inner layer, wherein said inner layer comprises less fat that is solid at 25°C than said outer layer, and wherein said barrier layer comprises fat and is in powder form.

Unless otherwise stated, all units of measure are standard SI units.

As used herein, the term "food product" is intended to mean any multi-layer food edible by a human or animal. The present invention is intended to prolong the outer layer's aesthetics. The invention may allow a firm outer layer that is susceptible to fat seepage from an inner layer, to remain firm longer. Non-limiting examples include multi-layer salty and sweet snacks, pet foods, and the like. The term confection is also intended to be encompassed by the term food product.

As used herein, the root word "inhibit" and its various forms in reference to inter-layer fluid migration is intended to refer to the temporary or permanent slowing, reduction, or cessation of fluid, especially fat, migration between the otherwise intimately-contacting layers of a multi-layer food product via interposition of a barrier layer. While the barrier layer may or may not inhibit the migration of a fluid out of food product layers, it should inhibit the migration of fluid into other food product layers or, if also used on the outside of a multi-layer food product, should act to extend the consumer acceptable visual appearance life of the multi-layer food product. Accordingly, "migration" refers to the travel of fluid into a layer and does not necessarily include the travel out of a layer.

As used herein, the term "barrier layer" is intended to refer to the inventive additional layer interposed between at least two, preferably fat-containing, layers of a multi layer food product, especially confections, in order to inhibit the migration of fluid, especially fat, between the two otherwise adjoining layers. As discussed further below, any edible material that serves as a fluid "sponge" and/or as a fluid pathway inhibitor may be utilized as a component of the barrier layer. It is preferred the barrier layer comprise powder with less than or equal to 60% total fat, more preferably from 2% to 50% total fat, more preferably from 5% to 40 % total fat, more preferably from 7% to 30% total fat, and most preferably from 10% to 25% total fat. It is preferred the fat contained within the barrier layer have a solid fat content at 25°C of 0% to 100%, more preferably from 50% to 100%, and most preferably from 80% to 100%. Preferred barrier layer components include powders obtained from oil seeds, nut meats, cocoa, chocolate, compound coatings, in-process chocolates, cocoa products, and combinations thereof. Generally, acceptable materials are described in CFR 21 Part 163 [U.S. Code of Federal Regulations, Food and Drugs 2 1, Part 163].

Other preferred barrier layer components are de-fatted or reduced fat solids from oil-bearing seeds, i.e. oil seeds, in powder form. Powder forms of the above-described materials for use as barrier layer components may be obtained through any suitable process including, but not limited to, pressing, milling; atomizing, blending, extraction, and crystallization. It is preferred the barrier layer comprises particles or powder with a minimum particle size of at least 0.01 microns, more preferably at least 0.1 microns, and most preferably at least 1 microns. It is preferred the barrier layer comprises particles or powder with a maximum particle size of at most 1000 microns, more preferably at most 500 microns, and most preferably at most 60 microns. Without wishing to be bound by theory, it is believed that void volume within the barrier layer contributes to the efficacy of the present invention; and, if so, it is preferred the particle size distribution of the particles within the barrier layer be narrow in order to maximize the void volume. Non-limiting examples of preferred materials that may comprise a barrier layer include cocoa powder, peanut flour, chocolate refinings, and combinations thereof. Particularly preferred are cocoa powder and chocolate refinings.

As used herein, the term "adverse impact" with reference to the addition of a fluid migration-inhibiting barrier layer in the multi-layer food product is intended to mean an intended consumer would object to an experience resulting from an aesthetic encounter with the multi-layer food product and therefore be less likely to consume the food product because of the interposed layer. It is preferred that the barrier layer does not adversely impact the food product while still inhibiting fluid migration. Designing a barrier layer that avoids an adverse impact on the food product can be carried out in several ways.

By way of non-limiting example, the barrier layer component(s) may be used in amounts that do not adversely impact the food product while still providing fluid migration inhibition. These amounts may vary for different barrier layers and multi-layer food product combinations depending on the relative strength of the barrier layer's aesthetics to those of other food product components' aesthetics or of the food product as a whole: Another non-limiting method may include grinding or milling of the barrier layer component(s) to finer median particle sizes to minimize a "gritty" mouth sensation relative to the food product as a whole. A third non-limiting method may include using only those barrier layer components that, while still providing migration inhibition, are compatible in flavor and mouth feel with the food product as a whole. Other ways will be apparent to the skilled artisan.

As used herein, the term "cocoa" is intended to refer to the press cake obtained by removing at least part of the cocoa butter from cocoa liquor. This removal may be performed via mechanical pressing or other extraction or stripping means. The press cake may be ground or milled to produce particles of varying median sizes including powders with the above-described preferred particle sizes. Cocoa typically contains 10-12% fat on the low side and 22-24% fat on the high side, 19-23% protein, 10-13% starch, 1-3% sugars, 19-23% cell wall constituents, 3-5% organic acids, 4-8% ash, and 2-5% moisture. Cocoa may also contain polyhydroxyphenols, theobromine, and caffeine. Cocoa is also available in reduced fat and fat-free forms. Fat-containing, reduced fat, and fat-free cocoas are commercially available and all are viable components of the migration-inhibiting barrier layer. If cocoa is utilized as a component of the migration-inhibiting barrier layer, the powder form is preferred.

As used herein, the term "chocolate refinings" refers to the products obtained during many chocolate manufacturing processes. In the manufacture of chocolates, an important step is the use of a refiner or other milling equipment to reduce the particle size of most solids that comprise the chocolate recipe to a desired size. Typical solids include cocoa mass particles, sugar crystals, and milk solids. The feed stream to the refiner typically includes the full chocolate recipe except for an emulsifier, which is often lecithin, and some or no fat added, with cocoa butter and milk fat being the most common added fats. The discharge from the refining process is a powdery material with typical particle sizes of about 15 to about 60 microns, although other sizes are possible and contemplated, and tastes very similar to finished chocolate with a different texture. Typically, these refinings are further processed into smooth, liquid chocolate; however, for use in the present invention, the refinings may be used directly from the refiner prior to the addition of emulsifiers and/or additional fats and while they are still powders, a preferred form.

As used herein, the term "in-process chocolate" refers to any component stream taken from the chocolate manufacturing process prior to producing finished chocolate. The term includes, but is not limited to, chocolate refinings, crumb, dry mixes, pastes, conched material, chocolate prior to standardization, and combinations thereof

As used herein, the term "chocolate" includes, but is not limited to, cocoa mass, finished recipes for milk chocolate, dark chocolate, semisweet chocolate, bittersweet chocolate, white chocolate, compound coating, other cocoa products described by CFR 21. Part 163 [U.S. Code of Federal Regulations, Food and Drugs 21, Part 163], and combinations thereof.

As used herein, the term "peanut flour" refers to a product obtained by pressing, grinding, or milling peanuts into particulate form. Peanuts contain a, substantial amount of oil that causes the pressed or milled product to be pasty or creamy. To arrive at peanut flour, therefore, at least some of the natural oils or fats must be removed. Although typical peanut flour contains about 12% oil or fat and has the consistency of a particulate solid, a flour with more or less than 12% fat or oil may be used. Peanut flour is known to skilled artisans and is available commercially. Other nut flours may also be used in the present invention.

The inner and/or outer layers can be chosen from any food product layer known to the skilled artisan. It is preferred the inner and/or outer layers comprise less than or equal to 60% total fat, more preferably less than or equal to 40% total fat. Individually, the inner and outer layers may comprise fat at different levels. It is preferred the inner layer(s) comprise less than or equal to 60% total fat, even more preferably less than or equal to 55% total fat, even more preferably less than or equal to 50% total fat, even more preferably less than or equal to 45% total fat, and most preferably less than or equal to 40% total fat Further, it is preferred the inner layer(s) comprise at least a minimum amount of fat, more preferably more than or equal to 5% total fat, even more preferably more than or equal to 10% total fat, even more preferably more than or equal to 15% total fat, even more preferably more than or equal to 20% total fat, and most preferably more than or equal to 25% total fat. It is preferred the outer layer comprises less than or equal to 60% total fat, even more preferably less than or equal to 45% total fat, even more preferably less than or equal to 40% total fat, and most preferably less than or equal to 35% total fat. Further, it is preferred the outer layer comprises at least a minimum amount of fat, more preferably more than or equal to 15% total fat, even more preferably more than or equal to 20% total fat, and most preferably more than or equal to 25% total fat. The inner layer(s) comprise less fat that is solid at 25°C than the outer layer. Specifically, it is preferred any fat in the inner layer(s) comprise fat that is less than or equal to 100% solid at 25°C, more preferably less than or equal to 98% solid at 25°C, and most preferably less than or equal to 85% solid at 25°C. It is also preferred any fat in the outer layer comprises fat that is at least or equal to 85% solid at 25°C, more preferably at least or equal to 90% solid at 25°C, more preferably at least or equal to 93% solid at 25°C. and most preferably at least or equal to 95% solid at 25°C. Exemplary outer layer fats that are primarily solid at 25°C include cocoa butter, cocoa butter equivalents, other temperable fats, and combinations thereof Exemplary inner layer fats that are primarily liquid at 25°C are peanut oil and other nut oils. A skilled artisan would recognize that a fat that is primarily solid at 25°C, e.g. cocoa butter, is not compatible with a fat that is primarily liquid at 25°C, e.g. peanut oil.

The inner layer(s) may contain components including the following non-limiting examples: bonbons or pralines, caramel, nougat, truffle, fondant, taffy, fudge, toffee fillings, confectionary pastes, biscuits, wafers, roast nuts, cookies, fried food products, cakes, marshmallow, peanut butter, nut meat, coconut, artificial or natural fruit and fruit derivatives, cheese, cheese foods, meat, meat foods, meat by-products, and combinations thereof. Further, the inner layer may be any size and any shape including, for example, bite-sized candy centers, full-sized candy centers, lentils, spherical centers, non-spherical centers, substantially planar centers, and the like. The outer layer may include components like chocolate, milk chocolate, dark chocolate, compound coatings, confectionery coatings, artificial yogurt, natural yogurt, and combinations thereof. Also suitable are pretzel or other crunchy outer coats including those used in combination crunchy and chewy pet foods. The chocolate may be standard of identity (SOI) chocolate or non-SOI chocolate with SOI chocolate being particularly preferred in the present invention. Furthermore, many inner and outer layer components are interchangeable or may be included in more than one layer of a multi-layer food product depending on regional consumer demands and/or process constraints. By way of non-limiting example, dark chocolate may cover milk chocolate, and vice versa. Further, the outer layer, if one is used, does not necessarily have to cover the entire inner layer. For example, chocolate may be used to overlay the top and sides of a wafer while the bottom of the wafer is not covered with chocolate. In this case, a barrier layer may or may not be necessary for the bottom of the wafer.

If the outer and/or inner layers contain temperable fats, e.g. the cocoa butter in chocolate, it is preferred that at least one of these layers is tempered, if possible, since this has been shown to increase the efficacy of the present invention and/or may extend the list of potential barrier layer components that may be used effectively to inhibit fat migration between the particular inner and outer layer combination. Of course, the more similar the inner and outer layers are with respect to fat type and content, the less likely fat is to diffuse between the inner and outer layers.

As discussed above, the migration of fluids, especially fat, between the layers of multi-layer food products may pose an obstacle to attaining at least some consumer's acceptance of, and satisfaction with, the food products, especially if the food product has been exposed to temperature cycling and/or protracted storage. During and after this exposure, fluids may migrate from one layer to another in order to diffuse different components more evenly throughout the food product. Typically, the migrating fluids are fats and oils such as, for example, cocoa butter. The problem is of particular concern when fluids migrate from or into the outer layer since this is the layer readily perceivable by a consumer upon opening the package.

If an outer layer, e.g. chocolate, is used in the multi-layer food product, the present invention seeks to provide a barrier layer between, at least, the outer layer and its otherwise adjoining inner layer, e.g. a peanut butter center. Of course, if more than one inner layer exists, a barrier layer may be provided between any layers where migration is sought to be inhibited. In some scenarios, multiple barrier layers may be necessary since fluids may migrate between any adjoining layers and, eventually, may reach the outer layer.

Without wishing to be bound by theory, it is believed intimate contact between layers is at least one enabling factor of fluid migration between the layers. Further, the phenomenon is more likely to occur between physicochemically similar layers. For instance, oil may be more likely to migrate from one oil-bearing layer into another oil-bearing layer and vice versa. It is also believed that a barrier layer, particularly those in powder form, may interpose a surface disruption which, in turn, inhibits the migration of fluids, especially fats, between two otherwise adjoining layers. The present invention seeks to provide a surface disruption at some point between two otherwise intimately-contacting layers, i.e. the barrier layer need not be in intimate contact with both, or any, of the layers. Most preferably, any inner layer is completely surrounded by at least one barrier layer, which, in turn, is completely surrounded by the outer layer. In this manner, fluid migration may be inhibited across every surface of the inner and/or outer layers.

The exact mechanism of the present invention is not known. Whether the interposed layer blocks at least some of the inter-layer fluid migration pathways, acts as a fluid "sponge," sacrificial layer, oil sink, or any combination thereof, is unclear. What is clear, however, is that when samples were dissected after temperature cycling and/or storage, a once substantially dry powder barrier layer was interspersed with fat, which presumably would have traveled relatively easily between and into otherwise intimately contacting layers. Rather than a consumer-perceivable outer chocolate layer being damaged due to fat migration, the interposed layer acted, at least temporarily, as a sacrificial layer and was unperceivable from the outside of the intact multi-layer food product. Further, if so desired and when properly designed, the layer may not even be perceivable in taste and/or mouth feel relative to the food product as a whole. It is preferred the thickness of the fluid migration inhibition layer be at least 0.01 microns thick, more preferably at least 0.05 microns thick, and most preferably at least 0.1 microns thick. It is also preferred the thickness of the fluid migration inhibition layer be at most 2 mm thick, more preferably at most 1000 microns thick, even more preferably at most 500 microns thick, and most preferably at most 100 microns thick. Layers within the foregoing thickness ranges may be constructed by utilizing one layer of particles of the desired layer thickness or several layers of particles smaller than the desired final fluid inhibition layer thickness.

While it is believed the present invention will operate to inhibit the migration of most fluids, the migration inhibition of oil and fat is of particular concern since the migration of oil and/or fat from and/or into, e.g. chocolate, may lead to fat bloom. If a chocolate layer on the outside of a multi-layer confection is bloomed, some consumers may reject the confection. One non-limiting example is peanut butter covered with chocolate. At least some of the oils in the peanut butter migrate into the chocolate outer layer after storage and/or temperature cycling. Some of the oils in the chocolate may migrate into the peanut butter as well. The oil migration between these two layers may lead to a confection with a bloomed chocolate outer layer, a confection that does not maintain its physical integrity, or both. A barrier layer, for instance cocoa powder or peanut flour, applied to the outside of the peanut butter layer prior to covering it with chocolate will inhibit at least a portion of the oils from migrating from the peanut butter into the outer chocolate layer and vice versa. The result is a multi-layer confection with increased resistance to temperature cycling, longer shelf life, or both.

The barrier layer or coat may be applied to the inner food product layer(s), pieces, or centers in several ways. Further, the barrier layer may be applied to the outside of any or all of the inner layers in a multi-layer food product. Additionally, it is only necessary that the barrier layer cover inner layer(s) in the areas where fluid migration is sought to be inhibited. In other words, if a food product will not be provided with an outer layer on its bottom side, and/or the visual appearance of the bottom side of the food product are of minimal concern, then a barrier layer need not extend to the bottom of the food product. In one non-limiting example, a nougat and nut meat combination can be prepared and shaped to act as the confectionery center of a multi-layer confection. The food product centers may then be coated with the barrier layer in several ways, for example, dusting, panning, sprinkling, and spraying, all of which are known to skilled artisans.

It is worthwhile to note that while the following discussion expounds tacky food product centers for adhesion of the barrier layer component(s), tacky or sticky barrier layer component(s) are also envisioned, particularly when those components are contained in a liquid carrier that easily evaporates. It is also worthwhile to note that while reference is hereinafter made to "at least partial" coverage of the surface of the inner layer of the food product with the barrier layer, the invention also envisions, and prefers, substantial coverage when necessary to inhibit fluid migration across every surface of a food product inner layer. Furthermore, consideration must also be given to uniformity of barrier layer coverage; and, since the barrier layer is to act as an inhibitive layer, substantially uniform coverage is desirable in the areas intended to be covered.

One way to dust the centers would be to pass the confectionery pieces through a wind tunnel having a barrier layer component mixed with and recycled into the circulating wind. Since the confectionery pieces may be sticky or tacky from exposure to elevated temperatures earlier in the production process, the wind-circulated barrier layer component(s) will collide with and adhere to the sticky surface of the confectionery pieces. Once the confectionery pieces' surfaces are at least partially coated, the surfaces will no longer be as sticky and further accumulation of barrier layer component(s) will be decreased. The barrier layer possessing pieces may then be covered with an outer layer, further processed, or prepared for the addition of another inner layer of the confection.

Panning refers to the gradual process of building a layer around confectionary pieces, typically substantially round centers, by moving or rolling the pieces in a pan-like apparatus while exposing them to, in this case, barrier layer component(s) in either dry or liquid form. The movement of the confectionery pieces and the exposure to the barrier layer component(s) gradually builds the barrier layer around the confectionery pieces. The barrier layer possessing pieces may then be covered with an outer layer, further processed, or prepared for the addition of another inner layer of the confection.

One way to sprinkle coat the confectionery pieces with a barrier layer would be to sprinkle or scatter, in liquid carrier drop or solid particle form, the barrier layer component(s) over confectionery pieces. The barrier layer component(s) will adhere to the surface of the confectionery pieces and at least partially cover the surface of the confectionery pieces. The barrier layer possessing pieces may then be covered with an outer layer, further processed, or prepared for the addition of another inner layer of the confection.

One way to spray coat the confectionery pieces with a barrier layer is to project a liquid or gaseous spray containing the barrier layer component(s) onto the surfaces of the confectionery pieces. The barrier layer component(s) could be dry barrier layer component(s) in a gaseous carrier or a liquid that evaporates easily and/or is compatible with further confectionery process steps. The spray should be applied with an eye toward achieving at least partial coverage of the confectionery pieces. The barrier layer possessing pieces may then be covered with an outer layer, further processed, or prepared for the addition of another inner layer of the confection.

### Example

Samples of multi-layered confections wherein the inner layer was comprised of nougat, peanuts, and caramel were covered with an outer layer comprised of chocolate. Proportions for the inner layer and the chocolate outer layer were held constant for all samples. Test samples were prepared with the inventive barrier layer between the inner layer and the chocolate outer layer. Control samples were prepared without the barrier layer. All of the samples, test and control, were cycled in a cabinet for 8 hours at 31°C and 16 hours at 21°C, i.e., one full cycle is 24 hours. The samples were evaluated once during each cycle at about eight to about eleven hours into the 21°C portion of the cycle. During the evaluation, the samples were classified as either acceptable or failed, in reference to the amount of visible fat deposition or bloom on the outer surfaces. After 30 cycles, the control samples were classified as failed due to visible bloom on the surface, while the test samples produced in accordance with the present invention showed little or no fat deposition or bloom and therefore classified as acceptable. As can be appreciated; the confection produced in accordance with the present invention can tolerate more temperature cycling during transport and shipping and will likely be received by a consumer m far better physical condition.

Other embodiments of the present invention within the scope of the accompanying claims will be apparent to the skilled artisan.

## Claims

1. A method to inhibit migration of fat in multi-layer food products comprising the steps of providing at least one barrier layer for the inhibition of fat migration overlaying at least a portion of an outer surface of at least one inner layer comprising fat, and providing an outer layer that overlays at least a portion of said at least one inner layer, wherein said inner layer comprises less fat that is solid at 25°C than said outer layer, and wherein said barrier layer comprises fat and is in powder form.

2. The method according to Claim 1, wherein said at least one barrier layer comprises an edible material selected from the group consisting of peanut flour, oil seed powder, chocolate refinings, cocoa powder, in-process chocolate, and combinations thereof.

3. The method according to any preceding claim, wherein said at least one barrier layer surrounds said at least one inner layer.

4. The method according to any preceding claim, wherein said outer layer surrounds said at least one barrier layer.

5. The method according to any preceding claim, wherein said at least one inner layer comprises an edible material selected from the group consisting of nougat, toffee, nut meat, praline, chocolate, caramel, crisped rice, biscuit, cookie, marshmallow, coconut, and combinations thereof.

6. The method according to any preceding claim, wherein said outer layer comprises an edible material selected from the group consisting of chocolate, compound coating, natural yogurt, artificial yogurt, and combinations thereof.

7. The method according to any preceding claim, wherein said barrier layer comprises particles having a size of 1 to 60 microns.

8. The method according to any preceding claim, wherein said barrier layer comprises less than 25% fat that is liquid at 25°C.

9. The method according to any preceding claim, wherein the at least one inner layer comprises from 5% to 60% total fat.

10. The method according to any preceding claim, wherein the outer layer comprises from 15% to 60% total fat.

11. The method according to any preceding claim, wherein any fat in the outer layer comprises fat that is at least or equal to 85% solid at 25°C.

12. A fat migration-inhibited multi-layer food product comprising at least one inner layer comprising fat, at least one barrier layer for the inhibition of fat migration overlaying at least a portion of an outer surface of said at least one inner layer, and an outer layer that overlays at least a portion of said at least one inner layer, wherein said inner layer comprises less fat that is solid at 25°C than said outer layer, and wherein said barrier layer comprises fat and is in powder form,

13. The food product according to Claim 12, wherein said at least one barrier layer comprises an edible material selected from the group consisting of peanut flour, oil seed powder, chocolate refinings, cocoa powder, in-process chocolate, and combinations thereof.

14. The food product according to any of claims 12 to 13, wherein said at least one barrier layer surrounds said at least one inner layer.

15. The food product according to any of claims 12 to 14, wherein said outer layer surrounds said at least one barrier layer.

16. The food product according to any of claims 12 to 15, wherein said at least one inner layer comprises an edible material selected from the group consisting of nougat, toffee, nut meat, praline, chocolate, caramel, crisped rice, biscuit, cookie, marshmallow, coconut, and combinations thereof.

17. The food product according to any of claims 12 to 16, wherein said outer layer comprises chocolate, compound coating, natural yogurt, artificial yogurt, and combinations thereof.

18. The food product according to any of claims 12 to 17, wherein said barrier layer comprises particles having a size of 1 to 60 microns.

19. The food product according to any of claims 12 to 18, wherein said barrier layer comprises less than 25% fat that is liquid at 25°C.

20. The food product according to any of claims 12 to 19, wherein the at least one inner layer comprises from 5% to 60% total fat.

21. The food product according to any of claims 12 to 20, wherein the outer layer comprises from 15% to 60% total fat.

22. The food product according to any of claims 12 to 21, wherein any fat in the outer layer comprises fat that is at least or equal to 85% solid at 25°C.

## Patentansprüche

1. Verfahren zum Inhibieren der Migration von Fett in mehrschichtigen Lebensmittelprodukten, umfassend die Schritte des Bereitstellens mindestens einer Barriereschicht für die Inhibierung der Fettmigration, welche über mindestens einem Bereich einer äußeren Oberfläche mindestens einer inneren Schicht, die Fett umfaßt, liegt, und des Bereitstellens einer äußeren Schicht, die über mindestens einem Bereich der mindestens einen inneren Schicht liegt, wobei die innere Schicht weniger Fett, das bei 25°C fest ist, als die äußere Schicht umfaßt, und wobei die Barriereschicht Fett umfaßt und in Pulverform vorliegt.

2. Verfahren nach Anspruch 1; wobei die mindestens eine Barriereschicht ein eßbares Material, ausgewählt aus der Gruppe, bestehend aus Erdnußmehl, Ölsamenpulver, Schokoladenraffinationen bzw. -verfeinerungen, Kakaopulver, prozessinterne Schokolade bzw. Zwischenschokolade und Kombinationen davon, umfaßt.

3. Verfahren nach einem der vorstehenden Ansprüche, wobei die mindestens eine Barriereschicht um die mindestens eine innere Schicht herum angeordnet ist.

4. Verfahren nach einem der vorstehenden Ansprüche, wobei die äußere Schicht um die mindestens eine Barriereschicht herum angeordnet ist.

5. Verfahren nach einem der vorstehenden Ansprüche, wobei die mindestens eine innere Schicht ein eßbares Material, ausgewählt aus der Gruppe, bestehend aus Nougat, Karamel bzw. Toffee, Nußfleisch, Praline, Schokolade, Karamel, Knusperreis, Biskuit, Keks, Marshmallow, Kokosnuß und Kombinationen davon, umfaßt.

6. Verfahren nach einem der vorstehenden Ansprüche, wobei die äußere Schicht ein eßbares Material, ausgewählt aus der Gruppe, bestehend aus Schokolade, Beschichtungsmassen, natürlichem Joghurt, künstlichem Joghurt und Kombinationen davon, umfaßt.

7. Verfahren nach einem der vorstehenden Ansprüche, wobei die Barriereschicht Teilchen mit einer Größe von 1 bis 60 µm umfaßt.

8. Verfahren nach einem der vorstehenden Ansprüche, wobei die Barriereschicht weniger als 25% Fett, das bei 25°C flüssig ist, umfaßt.

9. Verfahren nach einem der vorstehenden Ansprüche, wobei die mindestens eine innere Schicht von 5% bis 60% Gesamtfett umfaßt.

10. Verfahren nach einem der vorstehenden Ansprüche, wobei die äußere Schicht von 15% bis 60% Gesamtfett umfaßt.

11. Verfahren nach einem der vorstehenden Ansprüche, wobei jedwedes Fett in der äußeren Schicht Fett umfaßt, das bei 25°C mindestens oder gleich 85% fest ist.

12. Fettmigrations-inhibiertes, mehrschichtiges Lebensmittelprodukt, umfassend mindestens eine innere Schicht, die Fett umfaßt, mindestens eine Barriereschicht für die Inhibierung der Fettmigration, welche über mindestens einem Bereich einer äußeren Oberfläche der mindestens einen inneren Schicht liegt, und eine äußere Schicht, die über mindestens einem Bereich der mindestens einen inneren Schicht liegt, wobei die innere Schicht weniger Fett, das bei 25°C fest ist, als die äußere Schicht umfaßt, und wobei die Barriereschicht Fett umfaßt und in Pulverform vorliegt.

13. Lebensmittelprodukt nach Anspruch 12, wobei die mindestens eine Barriereschicht ein eßbares Material, ausgewählt aus der Gruppe, bestehend aus Erdnußmehl, Ölsamenpulver, Schokoladenraffinationen, Kakaopulver, Zwischenschokolade und Kombinationen davon, umfaßt.

14. Lebensmittelprodukt nach einem der Ansprüche 12 bis 13, wobei die mindestens eine Barriereschicht um die mindestens eine innere Schicht herum angeordnet ist.

15. Lebensmittelprodukt nach einem der Ansprüche 12 bis 14, wobei die äußere Schicht um die mindestens eine Barriereschicht herum angeordnet ist.

16. Lebensmittelprodukt nach einem der Ansprüche 12 bis 15, wobei die mindestens eine innere Schicht ein eßbares Material, ausgewählt aus der Gruppe, bestehend aus Nougat, Toffee, Nußfleisch, Praline, Schokolade, Karamel, Knusperreis, Biskuit, Keks, Marshmallow, Kokosnuß und Kombinationen davon, umfaßt.

17. Lebensmittelprodukt nach einem der Ansprüche 12 bis 16, wobei die äußere Schicht Schokolade, Beschichtungsmassen, natürlichen Joghurt, künstlichen Joghurt und Kombinationen davon umfaßt.

18. Lebensmittelprodukt nach einem der Ansprüche 12 bis 17, wobei die Barriereschicht Teilchen mit einer Größe von 1 bis 60 µm umfaßt.

19. Lebensmittelprodukt nach einem der Ansprüche 12 bis 18, wobei die Barriereschicht weniger als 25% Fett, das bei 25°C flüssig ist, umfaßt.

20. Lebensmittelprodukt nach einem der Ansprüche 12 bis 19, wobei die mindestens eine innere Schicht von 5% bis 60% Gesamtfett umfaßt.

21. Lebensmittelprodukt nach einem der Ansprüche 12 bis 20, wobei die äußere Schicht von 15% bis 60% Gesamtfett umfaßt.

22. Lebensmittelprodukt nach einem der Ansprüche 12 bis 21, wobei jedwedes Fett in der äußeren Schicht Fett umfaßt, das bei 25°C mindestens oder gleich 85% fest ist.

## Revendications

1. Procédé permettant d'inhiber la migration de graisse dans des produits alimentaires multicouches, comprenant les étapes consistant à fournir au moins une couche barrière destinée à inhiber la migration des graisses, recouvrant au moins une portion d'une surface externe d'au moins une couche interne comportant de la graisse, et à fournir une couche externe qui recouvre au moins une portion de ladite couche interne, au moins au nombre de une, dans lequel ladite couche interne comprend moins de graisse qui est solide à 25 °C que ladite couche externe, et dans lequel ladite couche barrière comprend de la graisse et se présente sous la forme de poudre.

2. Procédé selon la revendication 1, dans lequel ladite couche barrière, au moins au nombre de une, comprend un matériau comestible sélectionné dans le groupe composé de la farine d'arachide, de la poudre de graine oléagineuse, des produits du raffinage du chocolat, de la poudre de cacao, de chocolat en cours de fabrication, et de leurs combinaisons.

3. Procédé selon l'une quelconque des revendications précédentes, dans lequel ladite couche barrière, au moins au nombre de une, entoure ladite couche interne, au moins au nombre de une.

4. Procédé selon l'une quelconque des revendications précédentes, dans lequel ladite couche externe entoure ladite couche barrière, au moins au nombre de une.

5. Procédé selon l'une quelconque des revendications précédentes, dans lequel ladite couche interne, au moins au nombre de une, comprend un matériau comestible sélectionné parmi le groupe composé du nougat, du toffee (« caramel anglais »), de la chair de noix, des pralines, du chocolat, du caramel, du riz soufflé, du biscuit, des cookies, de la guimauve, de la noix de coco et de leurs combinaisons.

6. Procédé selon l'une quelconque des revendications précédentes, dans lequel ladite couche externe comprend un matériau comestible sélectionné dans le groupe composé du chocolat, d'un enrobage composé, de yaourt naturel, de yaourt artificiel et de leurs combinaisons.

7. Procédé selon l'une quelconque des revendications précédentes, dans lequel ladite couche barrière comprend des particules ayant une taille comprise entre 1 et 60 microns.

8. Procédé selon l'une quelconque des revendications précédentes, dans lequel ladite couche barrière comprend moins de 25 % de graisse qui est liquide à 25 °C.

9. Procédé selon l'une quelconque des revendications précédentes, dans lequel la couche interne, au moins au nombre de une, comprend 5 % à 60 % de graisse au total.

10. Procédé selon l'une quelconque des revendications précédentes, dans lequel la couche externe comprend 15 % à 60 % de graisse au total.

11. Procédé selon l'une quelconque des revendications précédentes, dans lequel toute graisse de la couche externe comprend de la graisse qui est pour 85 % ou pour au moins 85 % solide à 25 °C.

12. Produit alimentaire multicouche à migration de graisse inhibée, comprenant au moins une couche interne comprenant de la graisse, au moins une couche barrière destinée à inhiber la migration de graisse, recouvrant au moins une portion d'une surface externe de ladite couche interne, au moins au nombre de une, et une couche externe qui recouvre au moins une portion de ladite couche interne, au moins au nombre de une, dans lequel ladite couche interne comprend moins de graisse qui est solide à 25 °C que ladite couche externe, et dans lequel ladite couche barrière comprend de la graisse et se présente sous la forme de poudre.

13. Produit alimentaire selon la revendication 12, dans lequel ladite couche barrière, au moins au nombre de une, comprend un matériau comestible sélectionné dans le groupe composé de la farine d'arachide, de la poudre de graine oléagineuse, des produits du raffinage du chocolat, de la poudre de cacao, de chocolat en cours de fabrication, et de leurs combinaisons.

14. Produit alimentaire selon l'une quelconque des revendications 12 à 13, dans lequel ladite couche barrière, au moins au nombre de une, entoure ladite couche interne, au moins au nombre de une.

15. Produit alimentaire selon l'une quelconque des revendications 12 à 14, dans lequel ladite couche externe entoure ladite couche barrière, au moins au nombre de une.

16. Produit alimentaire selon l'une quelconque des revendications 12 à 15, dans lequel ladite couche interne, au moins au nombre de une, comprend un matériau comestible sélectionné dans le groupe composé du nougat, du toffee (« caramel anglais »), de la chair de noix, des pralines, du chocolat, du caramel, du riz soufflé, du biscuit, des cookies, de la guimauve, de la noix de coco et de leurs combinaisons.

17. Produit alimentaire selon l'une quelconque des revendications 12 à 16, dans lequel ladite couche externe comprend du chocolat, un enrobage composé, du yaourt naturel, du yaourt artificiel et leurs combinaisons.

18. Produit alimentaire selon l'une quelconque des revendications 12 à 17, dans lequel ladite couche barrière comprend des particules présentant une taille allant de 1 à 60 microns.

19. Produit alimentaire selon l'une quelconque des revendications 12 à 18, dans lequel ladite couche barrière comprend moins de 25 % de graisse qui est liquide à 25 °C.

20. Produit alimentaire selon l'une quelconque des revendications 12 à 19, dans lequel ladite couche interne, au moins au nombre de une, comprend 5 % à 60 % de graisse au total.

21. Produit alimentaire selon l'une quelconque des revendications 12 à 20, dans lequel la couche externe comprend 15 % à 60 % de graisse au total.

22. Produit alimentaire selon l'une quelconque des revendications 12 à 21, dans lequel toute graisse de la couche externe comprend de la graisse qui est pour 85 % ou pour au moins 85 % solide à 25 °C.
